# DEMANDE DE BREVET EUROPEEN

(11) **EP 0 798 194 A1**
(43) Date de publication de la demande: **01.10.1997**
(21) Numéro de dépôt: 97400607.4
(22) Date de dépôt: 18.03.1997
(51) Int. Cl.: B62B 5/06

(54) **Dispositif de montage de barre de manoeuvre, et appareil de manutention ou de transport correspondant**

(30) Priorité: 27.03.1996 FR 9603820
(71) Demandeur: CLARES MERCHANDISE HANDLING EQUIPMENT LIMITED, Wells, Somerset BA5 1UT (GB)
(72) Inventeur: Basharat, Abdul, Fishponds, Bristol BS 16 3 EP (GB)
(74) Mandataire: Jacobson, Claude

(57) **Abrégé**

Ce dispositif comprend une plaquette (9) qui comporte à une extrémité un bec recourbé (11) adapté pour coopérer avec l'extrémité de la boucle en U (1) du montant, un bossage (12) espacé du bec et adapté pour être reçu sans jeu notable entre les branches de la boucle, et un orifice (17) situé entre le bec et le bossage. La plaquette a, en au moins un emplacement de sa longueur, une largeur supérieure à l'intervalle qui sépare les branches du U. Le dispositif comporte également un insert (6) fixé dans l'extrémité (8) de la barre de manoeuvre (5), ainsi que des moyens (10) de fixation de l'insert à la plaquette à travers l'orifice (17) de cette dernière. L'extrémité (8) de la barre (5) est déformée radialement de façon à être positionnée angulairement, autour de l'axe de la barre, par le bossage (12) de la plaquette (9) et/ou par les branches du U.

Application aux chariots pour grandes surfaces de distribution.

## Description

La présente invention est relative à un dispositif de montage d'une extrémité d'une barre de manoeuvre tubulaire sur la boucle d'extrémité en U d'un montant en fil métallique d'un appareil de manutention ou de transport. Elle s'applique en particulier aux chariots destinés aux grandes surfaces de distribution.

L'invention a pour but de fournir une solution fiable et économique au montage de la barre de manoeuvre de tels chariots, qui assure en particulier un très bon positionnement angulaire de cette barre même si, ce qui est fréquent, celle-ci est équipée d'un consigneur à pièces de monnaie qui a pour conséquence des sollicitations importantes de la barre en rotation autour de son axe.

A cet effet, le dispositif de montage suivant l'invention comprend :
- une plaquette qui comporte à une extrémité un bec recourbé adapté pour coopérer avec l'extérieur de l'extrémité de la boucle, un bossage espacé du bec et adapté pour être reçu sans jeu notable entre les branches du U, et un orifice situé entre le bec et le bossage, la plaquette ayant, en au moins un emplacement de sa longueur, une largeur supérieure à l'intervalle qui sépare lesdites branches;
- un insert fixé dans la partie d'extrémité de la barre de manoeuvre; et
- des moyens de fixation de l'insert à la plaquette à travers l'orifice de cette dernière;
- la partie d'extrémité de la barre de manoeuvre étant déformée radialement de façon à former un embout qui est positionné angulairement, autour de l'axe de la barre, par coopération avec le bossage de la plaquette et/ou avec lesdites branches.

Le dispositif de montage suivant l'invention peut comporter une ou plusieurs des caractéristiques suivantes :
- la région de l'embout de la barre de manoeuvre qui est opposée au bossage de la plaquette coopère avec l'intérieur de l'extrémité de la boucle pour positionner la plaquette suivant l'axe de symétrie de cette boucle;
- la plaquette comporte une saillie, notamment un crevé, qui coopère avec l'intérieur de l'extrémité de la boucle pour positionner la plaquette suivant l'axe de symétrie de cette boucle;
- la région de l'embout de la barre de manoeuvre qui est opposée au bossage de la plaquette est déformée radialement pour épouser sensiblement la saillie de la plaquette;
- une coiffe adaptée pour s'enfiler sur la boucle munie de la plaquette et pour emprisonner le bec entre l'extrémité de cette boucle et le fond de la coiffe, la coiffe présentant une ouverture latérale de passage de l'embout de la barre de manoeuvre;
- l'ouverture de la coiffe est définie par un collet tubulaire qui entoure étroitement la barre de manoeuvre;
- la coiffe est monobloc.
- les moyens de fixation comprennent une vis qui traverse l'orifice de la plaquette et se visse dans l'insert;
- la vis traverse également une seconde ouverture de la coiffe opposée à la barre de manoeuvre, un chapeau de protection étant éventuellement disposé sur la tête de la vis et fixé dans ladite seconde ouverture.

L'invention a également pour objet un appareil de transport ou de manutention, notamment un chariot pour grande surface de distribution, qui comprend deux montants parallèles en fil métallique qui se terminent par une boucle en U, et une barre de manoeuvre fixée aux deux boucles et dont au moins une extrémité est montée sur la boucle correspondante au moyen d'un dispositif de montage tel que défini ci-dessus.

Des exemples de réalisation de l'invention vont maintenant être décrits en regard des dessins annexés, sur lesquels :
- la Figure 1 est une vue en perspective éclatée d'un premier mode de réalisation du dispositif de montage suivant l'invention;
- la Figure 2 est une vue en coupe du dispositif de la Figure 1, après assemblage;
- la Figure 3 est une vue analogue à la Figure 1 d'un autre mode de réalisation;
- la Figure 4 est une vue en plan d'une variante de la plaquette de la Figure 3;
- la Figure 5 est une vue de côté de la plaquette de la Figure 4, prise en regardant suivant la flèche V de cette Figure 4;
- la Figure 6 est une vue, prise en coupe suivant la ligne VI-VI de la Figure 7, d'une variante du dispositif de la Figure 3 incorporant la plaquette des Figures 4 et 5;
- la Figure 7 est une vue prise en coupe suivant la ligne VII-VII de la Figure 6 ou de la Figure 8; et
- la Figure 8 est une vue prise en coupe suivant la ligne VIII-VIII de la Figure 7.

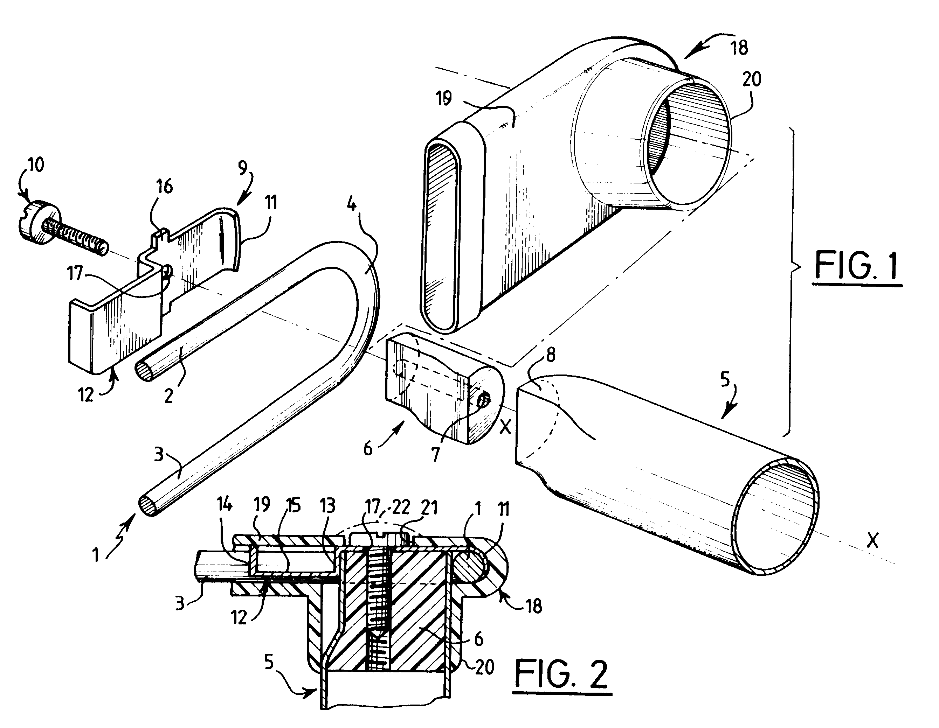

On a représenté sur la Figure 1 l'extrémité supérieure d'un montant latéral qui fait partie d'un appareil de transport ou de manutention, lequel peut être en particulier un chariot pour grande surface de distribution. Le montant est réalisé en fil métallique relativement rigide, et ce fil, à l'extrémité supérieure du montant, est recourbé sur lui-même pour former une boucle 1 en U. Ce U comporte deux brins parallèles 2 et 3 reliés par un demi-cercle supérieur 4.

Le chariot comporte du côté opposé un autre montant latéral identique parallèle au premier. Par conséquent, on ne décrira ci-dessous que le dispositif de montage relatif à la boucle 1, étant bien entendu qu'un dispositif de montage analogue est prévu pour le montant opposé.

La manoeuvre du chariot est assurée au moyen d'une barre tubulaire métallique 5 d'axe horizontal X-X et dont la section courante est circulaire. La barre 5 est munie d'un insert d'extrémité 6 en matière plastique. Cet insert comporte un orifice fileté 7 d'axe X-X et a une section en D, constituée d'un demi-cercle et d'un rectangle. Cette section est constante sur l'essentiel de la longueur de l'insert, mais augmente à son extrémité intérieure. Pour assembler l'insert et la barre, on introduit l'insert dans la partie d'extrémité 8 de la barre, sensiblement jusqu'à affleurement, puis cette partie d'extrémité est déformée suivant une section en D, constante puis agrandie, de façon à former un embout qui épouse la forme de l'insert et interdit à celui-ci de sortir de la barre.

Le montage de la barre 5 est réalisé au moyen d'une plaquette 9 en tôle emboutie et d'une vis 10.

La plaquette 9, de forme allongée, présente à son extrémité supérieure un bec torique 11 dont la section longitudinale forme un arc de cercle qui s'étend sur environ 90° (Figure 2). En vue en plan, le bec 11 a également une forme en arc de cercle, adaptée pour épouser l'extérieur de l'arc de cercle 4.

A son autre extrémité, la plaquette présente un bossage 12 à section longitudinale en U, avec deux branches intérieure 13 et extérieure 14 perpendiculaires au plan général de la plaquette, reliées par une âme 15 parallèle au même plan.

La largeur de la plaquette 9 est constante sur toute sa longueur et sensiblement égale à l'intervalle qui sépare les brins 2 et 3 du montant 1. Toutefois, à peu près à mi-longueur, au voisinage du bossage 12, la plaquette comporte, dans son plan, deux saillies latérales 16. A peu près entre celles-ci, sur son axe longitudinal, la plaquette est percée d'un trou 17.

Le dispositif de la Figure 1 est complété par une coiffe 18 monobloc en matière plastique, qui a une fonction de protection et de décoration. Cette coiffe comprend un étui plat 19, ouvert à son extrémité inférieure et à extrémité supérieure arrondie, et un collet tubulaire 20 en saillie sur une face latérale de cet étui. Le collet 20, dont le diamètre intérieur est sensiblement égal au diamètre extérieur courant de la barre 5, communique avec l'intérieur de l'étui 19 par toute la section de son ouverture, et un orifice circulaire 21 de diamètre très inférieur est prévu dans la face latérale opposée de l'étui.

Pour réaliser l'assemblage, on procède comme suit :
(1) On pose la plaquette 9 sur la boucle 1 de façon que son bec 11 épouse le demi-cercle 4 du U, que son bossage 12 se place entre les brins 2 et 3, et que ses saillies 16 s'appliquent sur ces derniers.
(2) On enfile la coiffe 18 sur l'ensemble montant-plaquette. Comme on le voit sur la Figure 2, ceci emprisonne le bec 11 entre le demi-cercle 4 et le fond de l'étui 19 et maintient la plaquette contre la boucle 1. L'orifice 21 de la coiffe est alors coaxial au trou 17 de la plaquette.
(3) On introduit la partie d'extrémité 8 de la barre 5, munie de l'insert 6, dans le collet 20. En fin de course, le plat du D vient coopérer avec la face intérieure 13, également plane, du bossage 12 de la plaquette, tandis que le demi-cercle du D vient épouser l'intérieur du demi-cercle 4 de la boucle 1. De plus, l'orifice fileté 7 de l'insert se place coaxialement au trou 17 de la plaquette.
(4) On termine l'assemblage en vissant la vis 10 dans l'orifice fileté 7, à travers le trou 17. En fin de vissage, la tête de la vis vient se loger dans l'orifice 21 de la coiffe et s'appliquer contre la plaquette.

Bien entendu, si on le désire, on peut mettre en place dans l'orifice 21 un cache 22 qui recouvre la tête de la vis, comme illustré en traits mixtes sur la Figure 2.

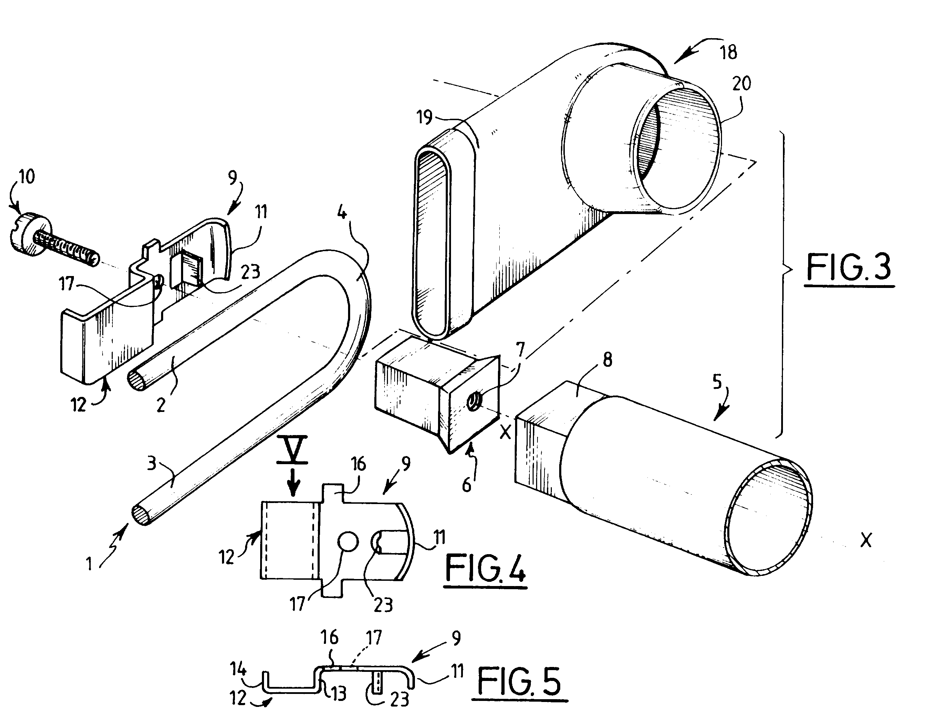

Le mode de réalisation de la Figure 3 ne diffère du précédent que par les points suivants :
- La partie plane de la plaquette 9 comporte un crevé qui forme une languette 23 repliée à 90°, incurvée en un arc de cercle parallèle au bec 11. Lorsque la plaquette est posée sur la boucle 1, cette languette 23 coopère avec l'intérieur du demi-cercle 4, lequel est donc emprisonné entre le bec 11 et la languette 23. Ainsi, la plaquette est positionnée d'elle-même par rapport à la boucle 1 dans le sens longitudinal comme dans le sens transversal.
- L'insert 6 a une section à peu près rectangulaire ou carrée, et la partie d'extrémité 8 de la barre 5 est conformée de manière correspondante. Ainsi, lorsque, la plaquette et la coiffe étant en place, on introduit la partie d'extrémité 8 dans le collet 20, cette partie d'extrémité vient coopérer, par son côté inférieur, avec la face 13 du bossage 12 et, par son côté supérieur, avec la face intérieure de la languette 23, ce qui positionne angulairement la barre de manoeuvre.

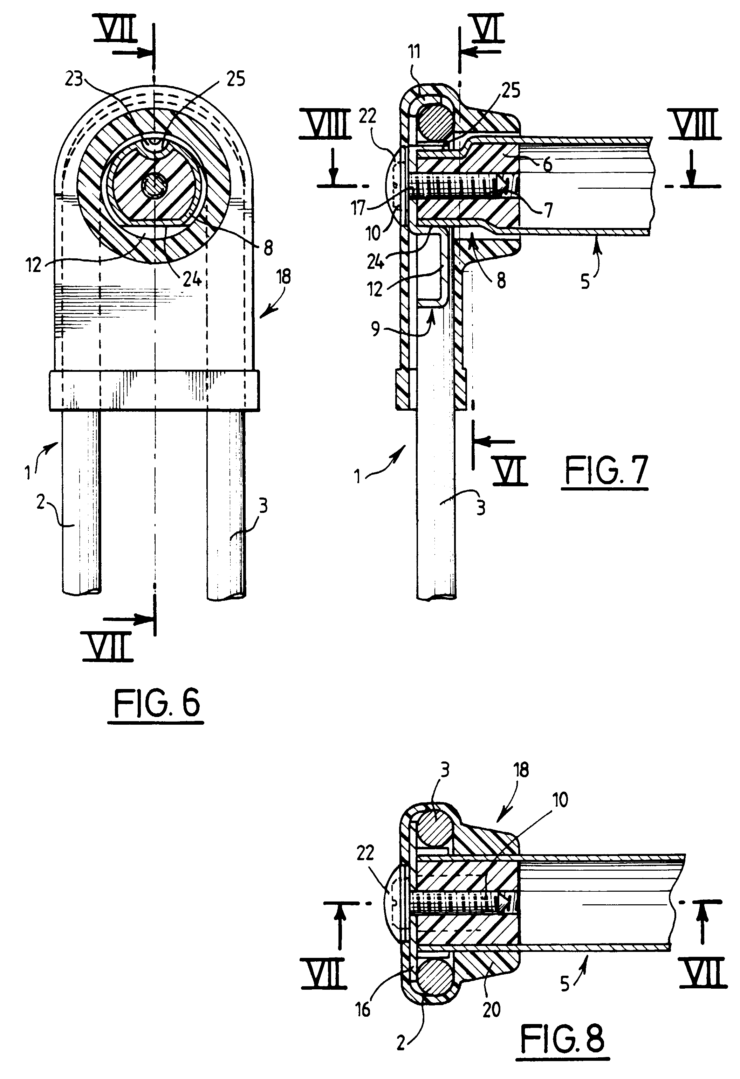

Les Figures 4 à 8 représentent une variante du mode de réalisation de la Figure 3, qui n'en diffère, pour l'essentiel, que par le point suivant : la languette 23 de la plaquette est convexe en direction du bossage 12, et la partie d'extrémité 8 de la barre de manoeuvre est déformée pour réaliser d'une part un méplat 24, lequel coopère avec la face plane 13 du bossage 12, et d'autre part, à l'opposé de ce méplat 24, une rainure longitudinale 25, laquelle épouse sensiblement la languette 23. La partie axialement extérieure de l'insert a une section correspondante, et sa partie axialement intérieure à une section circulaire identique à la section courante de la barre de manoeuvre.

## Revendications

1. Dispositif de montage d'une extrémité (8) d'une barre de manoeuvre tubulaire (5) sur la boucle d'extrémité en U (1) d'un montant en fil métallique d'un appareil de manutention ou de transport, ce dispositif comprenant:
- une plaquette (9) qui comporte à une extrémité un bec recourbé (11) adapté pour coopérer avec l'extérieur de l'extrémité (4) de la boucle, un bossage (12) espacé du bec et adapté pour être reçu sans jeu notable entre les branches (2, 3) du U, et un orifice (17) situé entre le bec et le bossage, la plaquette ayant, en au moins un emplacement de sa longueur, une largeur supérieure à l'intervalle qui sépare lesdites branches (2, 3);
- un insert (6) fixé dans la partie d'extrémité (8) de la barre de manoeuvre (5); et
- des moyens (10) de fixation de l'insert à la plaquette à travers l'orifice (17) de cette dernière;
- la partie d'extrémité (8) de la barre de manoeuvre (5) étant déformée radialement de façon à former un embout qui est positionné angulairement, autour de l'axe (X-X) de la barre, par coopération avec le bossage (12) de la plaquette (9) et/ou avec lesdites branches (2, 3).

2. Dispositif suivant la revendication 1, caractérisé en ce que la région de l'embout (8) de la barre de manoeuvre (5) qui est opposée au bossage (12) de la plaquette (9) coopère avec l'intérieur de l'extrémité (4) de la boucle (1) pour positionner la plaquette suivant l'axe de symétrie de cette boucle.

3. Dispositif suivant la revendication 1, caractérisé en ce que la plaquette (9) comporte une saillie (23), notamment un crevé, qui coopère avec l'intérieur de l'extrémité (4) de la boucle (1) pour positionner la plaquette suivant l'axe de symétrie de cette boucle.

4. Dispositif suivant la revendication 3, caractérisé en ce que la région de l'embout (8) de la barre de manoeuvre (5) qui est opposée au bossage (12) de la plaquette est déformée radialement pour épouser sensiblement la saillie (23) de la plaquette.

5. Dispositif suivant l'une quelconque des revendications 1 à 4, caractérisé en ce qu'il comprend en outre une coiffe (18) adaptée pour s'enfiler sur la boucle (1) munie de la plaquette (9) et pour emprisonner le bec (11) entre l'extrémité de cette boucle et le fond de la coiffe, la coiffe présentant une ouverture latérale de passage de l'embout (8) de la barre de manoeuvre (5).

6. Dispositif suivant la revendication 5, caractérisé en ce que l'ouverture de la coiffe (18) est définie par un collet tubulaire (20) qui entoure étroitement la barre de manoeuvre (5).

7. Dispositif suivant la revendication 5 ou 6, caractérisé en ce que la coiffe (18) est monobloc.

8. Dispositif suivant l'une quelconque des revendications 1 à 7, caractérisé en ce que lesdits moyens de fixation (10) comprennent une vis qui traverse l'orifice (17) de la plaquette et se visse dans l'insert (6).

9. Dispositif suivant la revendication 8, caractérisé en ce que la vis (10) traverse également une seconde ouverture (21) de la coiffe (18) opposée à la barre de manoeuvre (5), un chapeau de protection (22) étant éventuellement disposé sur la tête de la vis et fixé dans ladite seconde ouverture (21).

10. Appareil de transport ou de manutention, notamment chariot pour grande surface de distribution, comprenant : deux montants parallèles en fil métallique qui se terminent par une boucle (1) en U, et une barre de manoeuvre (5) fixée aux deux boucles et dont au moins une extrémité est montée sur la boucle correspondante au moyen d'un dispositif de montage suivant l'une quelconque des revendications 1 à 9.
